# EUROPEAN PATENT APPLICATION

(11) **EP 2 333 637 A2**
(43) Date of publication of application: **15.06.2011**
(21) Application number: 10194126.8
(22) Date of filing: 08.12.2010
(51) Int. Cl.: G06F 1/16, G01S 5/14

(54) **Information-processing device, information-processing method, and program**

(30) Priority: 10.12.2009 JP 2009280426
(71) Applicant: NTT DoCoMo, Inc., Tokyo 100-6150 (JP)
(72) Inventor: Abe, Satoshi, Chiyoda-ku Tokyo 100-6150 (JP); Naruse, Naoki, Chiyoda-ku Tokyo 100-6150 (JP)
(74) Representative: HOFFMANN EITLE

(57) **Abstract**

An information-processing device comprises: a connection unit that connects to a detachable unit; a first detection unit that, based on a state of connection by the connection unit, detects a first state in which the detachable unit is detached from the information-processing device; an acquisition unit that, when the first detection unit detects the first state, acquires position information representing a position of the information-processing device or the detachable unit; a second detection unit that, based on a state of connection by the connection unit, detects a second state in which a predetermined condition relating to detachment of the detachable unit is fulfilled after the detection of the first state by the first detection unit; and an execution unit that, upon detection of the second state by the second detection unit, executes a process of notifying the position information acquired by the acquisition unit.

## Description

### Background

### Technical Field

The present invention relates to an information-processing device including a detachable part.

### Related Art

Some information-processing devices, such as mobile phones, include mutually detachable units that cooperate with one another to achieve a predetermined function. For example, JP2005-159406A discloses a mobile phone in which a first casing including a display screen and a second casing including a ten-key pad are detachable from each other. With the mobile phone disclosed in JP2005-159406A, a user can hold the first casing in one location to browse a display screen, while holding the second casing in another location to operate the ten-key pad. However, in a case where an information-processing device includes a part detachable from a main body, there is a risk that the detachable part may be lost.

### Summary

In view of the above background, an object of the present invention is, in an information-processing device including a part detachable from a main body, to lower the risk that the detachable part may be lost.

In one aspect of the present invention, there is provided an information-processing device comprising: a connection unit that connects to a detachable unit; a first detection unit that, based on a state of connection by the connection unit, detects a first state in which the detachable unit is detached from the information-processing device; an acquisition unit that, when the first detection unit detects the first state, acquires position information representing a position of the information-processing device or the detachable unit; a second detection unit that, based on a state of connection by the connection unit, detects a second state in which a predetermined condition relating to detachment of the detachable unit is fulfilled after the detection of the first state by the first detection unit; and an execution unit that, upon detection of the second state by the second detection unit, executes a process of notifying the position information acquired by the acquisition unit.

In a preferred embodiment of the present invention, the detection unit may comprise: a first connection unit that connects to the detachable unit physically; and a second connection unit that connects to the detachable unit by wireless communication, the first detection unit detecting the first state based on a state of connection by the first connection unit, the second detection unit detecting the second state based on a state of connection by the second connection unit.
In another preferred embodiment of the present invention, the connection unit may connect to the detachable unit by performing wireless communication with the detachable unit within a predetermined range, the first detection unit may detects the first state when the wireless communication with the detachable unit by the connection unit is possible, and the second detection unit may detect the second state when the wireless communication with the detachable unit by the connection unit has become impossible.
In yet another preferred embodiment of the present invention, the position information acquired by the acquisition unit may include first position information and second position information that is acquired after acquisition of the first position information, and the second detection unit may detect the second state based on whether a distance between a position indicated by the first position information and a position indicated by the second position information exceeds a predetermined threshold value, instead of based on the state of connection by the connection unit.
In yet another preferred embodiment of the present invention, the acquisition unit may acquire the position information after a predetermined time period has lapsed from the detection of the first state by the first detection unit.
In yet another preferred embodiment of the present invention, the execution unit may executes a process of displaying a position indicated by the position information superimposed on a map without requiring an operation performed by a user.
In yet another preferred embodiment of the present invention, the execution unit may perform the process by transmitting data including the position information to an external device.

In another aspect of the present invention, there is provided an information-processing method comprising: detecting a first state in which a unit that can be detachably connected to an information-processing device by means of a connection unit is detached from the information-processing device, based on a state of connection by the connection unit; when the first state is detected, acquiring position information representing a position of the information-processing device or the detachable unit; detecting, based on a state of connection by the connection unit, a second state in which a predetermined condition relating to detachment of the detachable unit is fulfilled after the detection of the first state; and upon detection of the second state, executing a process of notifying the acquired position information.
In yet another aspect of the present invention, there is provided a program, which when executed by a computer of an information-processing device, causes the computer to execute a method comprising: detecting a first state in which a unit that can be detachably connected to the information-processing device by means of a connection unit is detached from the information-processing device, based on a state of connection by the connection unit; when the first state is detected, acquiring position information representing a position of the information-processing device or the detachable unit; detecting, based on a state of connection by the connection unit, a second state in which a predetermined condition relating to detachment of the detachable unit is fulfilled after the detection of the first state; and upon detection of the second state, executing a process of notifying the acquired position information.

The present invention makes it possible, in an information-processing device including a part detachable from a main body, to lower the risk that the detachable part may be lost.

### Brief Description of the Drawings

Exemplary embodiments of the present invention will now be described in detail with reference to the following figures, wherein:

FIGS. 1A-1C are diagrams each showing an outer appearance of an information-processing device;
FIG. 2 is a block diagram showing a hardware configuration of the information-processing device;
FIG. 3 is a functional block diagram showing functions implemented by the information-processing device;
FIG. 4 is a flowchart showing a process executed by the information-processing device; and
FIG. 5 is a diagram showing an example of displayed position information.

### Detailed Description

### [Exemplary Embodiment]

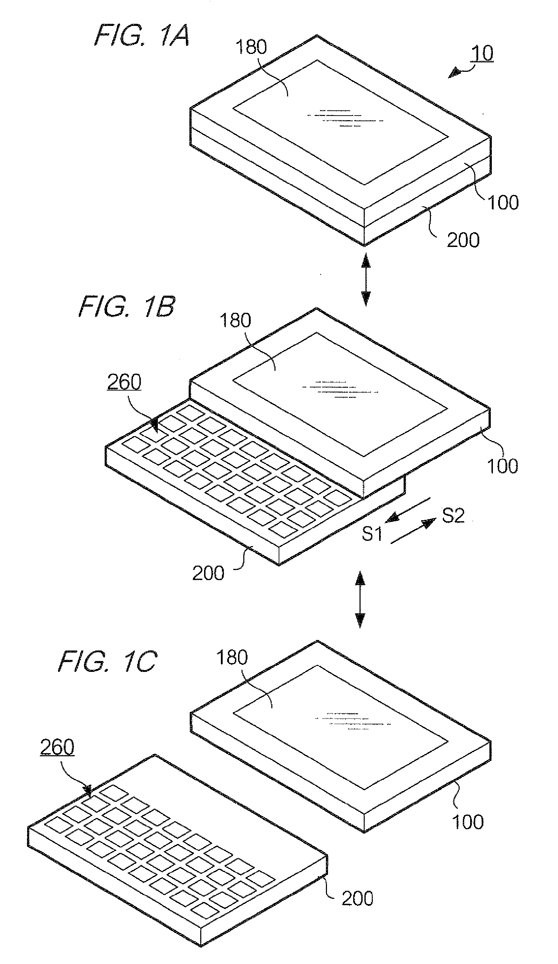

FIGS. 1A-1C are diagrams each showing an outer appearance of an information-processing device, which is an exemplary embodiment of the present invention. Information-processing device 10 according to this embodiment is a mobile phone, and includes first unit 100 and second unit 200. First unit 100 is equipped with touch panel unit 180 including a display, and second unit 200 is equipped with operation unit 260 including keys (hard keys). An outer form of information-processing device 10 can be changed by a user, and information-processing device 10 may be in one of a first mode shown in FIG. 1A, a second mode shown in FIG. 1B, and a third mode shown in FIG. 1C. It is to be noted that, for convenience of explanation, first unit 100 is also referred to as a "base unit" and second unit 200 is also referred to as a "subordinate unit" in the following description. Further, it is to be noted that each of first unit 100 and second unit 200 may be an example of an information-processing device according to the present invention.

First unit 100 and second unit 200 are detachable from each other. A user of information-processing device 10 can cause second unit 200 to slide relative to first unit 100 in a direction indicated by arrow S1 in FIG. 1B, thereby to bring information-processing device 10 from a state in which operation unit 260 of second unit 200 is hidden (first mode) into a state in which operation unit 260 of second unit 200 is exposed (second mode). When the user causes second unit 200 to slide further from the state of the second mode, information-processing device 10 can be brought into a state in which second unit 200 is detached (third mode). It is to be noted that by performing the above-described operation in reverse, i.e., by moving second unit 200 in a direction indicated by arrow S2 in FIG. 1B, a user can bring information-processing device 10 from the third mode into the second mode or into the first mode.

In the present embodiment, a state in which information-processing device 10 is in the first mode or in the second mode is referred to as a state in which second unit 200 is mounted on first unit 100, while a state in which information-processing device 10 is in the third mode is referred to as a state in which second unit 200 is detached from first unit 100. It is to be noted here that the term "mounted" indicates a state in which first unit 100 and second unit 200 are connected physically to each other, and the term "detached" indicates a state in which such a mounted state is not maintained, i.e., a state in which first unit 100 and second unit 200 are not connected physically to each other. "Connected physically" may simply mean in physical contact.

In the present embodiment, a structure for detachably attaching first unit 100 and second unit 200 to each other is realized by provision of a rail on first unit 100 and second unit 200. However, the structure is not thus limited. For example, first unit 100 and second unit 200 may be connected physically to each other by means of a member such as a pin or the like, so that they can be detached from each other when the member is removed, or second unit 200 may be mounted by being fitted in/over first unit 100, so that they can be detached from each other when a release switch is pressed.

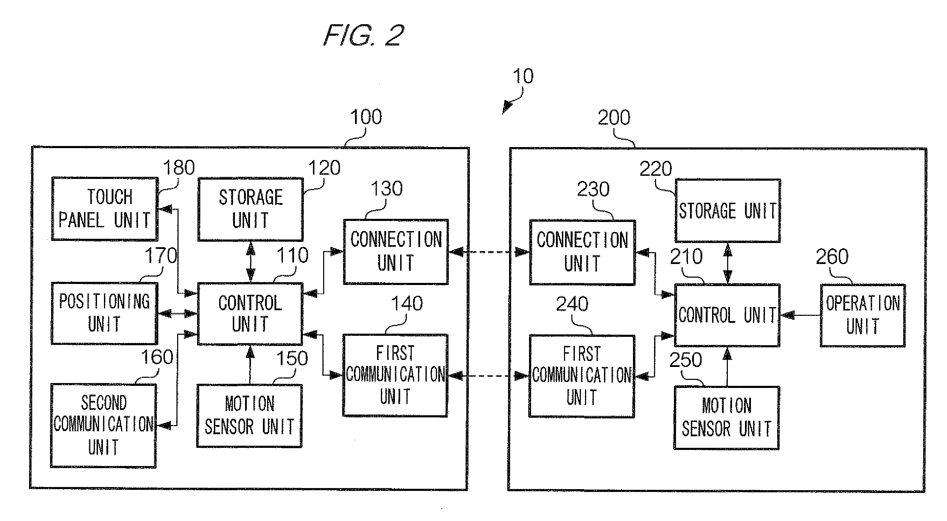

FIG. 2 is a block diagram showing a hardware configuration of information-processing device 10. As shown in this drawing, first unit 100 includes control unit 110, storage unit 120, connection unit 130, first communication unit 140, motion sensor unit 150, second communication unit 160, positioning unit 170, and touch panel unit 180. Second unit 200 includes control unit 210, storage unit 220, connection unit 230, first communication unit 240, motion sensor unit 250, and operation unit 260.

Control unit 110 includes a processor such as a CPU (Central Processing Unit) and a memory, and executes a predetermined program to control various parts of first unit 100. Further, control unit 110 has a clock function, and acquires time information. The time information is not limited to that expressed in hours, minutes, and seconds and may also include a date (year, month, and day). Storage unit 120 includes a storage means such as a flash memory or the like, and stores necessary data. The data stored in storage unit 120 include, for example, the aforementioned program and data written by control unit 110.

Connection unit 130 is for physically connecting to connection unit 230 of second unit 200, and is an example of a connection unit (first connection unit) of the present invention. Connection unit 130 and connection unit 230 are each an electric contact provided at a predetermined position, and when they contact each other, they are electrically connected. In this embodiment, when second unit 200 is mounted on first unit 100, these units communicate with each other using the electric connection between connection unit 130 and connection unit 230, without using wireless communication between first communication unit 140 and first communication unit 240. It is to be noted, however, that the wireless communication between first communication unit 140 and first communication unit 240 need not be prevented when second unit 200 is mounted on first unit 100.

First communication unit 140 is a means for conducting wireless communication with first communication unit 240 of second unit 200 according to a first communication protocol, thereby to achieve an electric connection with second unit 200. First communication unit 140 is an example of a connection unit (second connection unit) of the present invention. In this embodiment, for ease of explanation, it is assumed that the first communication protocol is Bluetooth ™. However, in the present invention, the first communication protocol is not limited to Bluetooth. The first communication protocol may be any communication protocol, so long as it can provide wireless communication between two units.

The range in which wireless communication can be conducted using Bluetooth is within a radius of 100 m in Class 1 (Power: 100mW), and within a radius of 10 m in Class 2 (Power: 2.5mW). However, this range is a theoretical value, and in practice, can vary depending on an environment in which the wireless communication is conducted. In the present embodiment, first communication unit 140 and first communication unit 240 support Class 2. Also, in the present embodiment, first communication unit 140 corresponds to a master unit, and first communication unit 240 corresponds to a slave unit.

Motion sensor unit 150 includes a sensor for detecting a movement of first unit 100, and supplies motion information representing a movement of first unit 100 to control unit 110. Motion sensor unit 150 includes an acceleration sensor, for example. The acceleration sensor preferably is a three-axis sensor that can detect a change in acceleration three-dimensionally.

Second communication unit 160 is a means for conducting wireless communication according to a second communication protocol. In the present embodiment, the second communication protocol is a communication protocol that uses a mobile communications network. In this case, second communication unit 160 conducts wireless communication with a base station included in the mobile communications network.
Positioning unit 170 carries out positioning of first unit 100, i.e., measures a position of first unit 100, and supplies position information representing the measured position to control unit 110. In the present embodiment, positioning unit 170 performs positioning using GPS (Global Positioning System). The positioning performed using GPS may include positioning performed using wireless communication conducted by second communication unit 160. It is to be noted that positioning unit 170 may perform positioning by means other than that using GPS. For example, positioning may be performed according to a base station positioning procedure, in which position information is calculated based on position information of a base station(s) in a mobile communications network.

Touch panel unit 180 includes a display such as a liquid crystal display or the like, and a touch sensor overlaid on the display, and displays various images. Touch panel unit 180 displays images resembling keys, and detects user contact with these images, thereby to receive an operation performed by the user. Thus, touch panel unit 180 includes both a display means and an operation means. Touch panel unit 180 provides operation information representing a received operation to control unit 110.
It is to be noted that first unit 100 may have an operation means other than touch panel unit 180. Also, the display means and the operation means of first unit 100 may be provided separately, instead of being provided in a body as in touch panel unit 180.

Control unit 210 of second unit 200 is a control means similar to control unit 110 of first unit 100. However, since control unit 210 controls a smaller number of parts than are controlled by control unit 110, control unit 210 may have a capability smaller than that of control unit 110. Storage unit 220 is a storage means similar to storage unit 120 of first unit 100. However, storage unit 220 need not have the same data storage capacity as that of storage unit 120. Connection unit 230 is a connection unit that corresponds to connection unit 130 of first unit 100, and first communication unit 240 is a connection unit that corresponds to first communication unit 140 of first unit 100. Motion sensor unit 250 includes a sensor similar to that included in motion sensor unit 150 of first unit 100.

Operation unit 260 includes a plurality of keys, and provides operation information to control unit 210. The keys of operation unit 260 can be used in combination with touch panel unit 180, and may resemble a keyboard with alphabet keys in QWERTY arrangement (sometimes called a full keyboard). It is to be noted that operation unit 260 may include a key included in first unit 100, or may include a key that is not included in first unit 100.

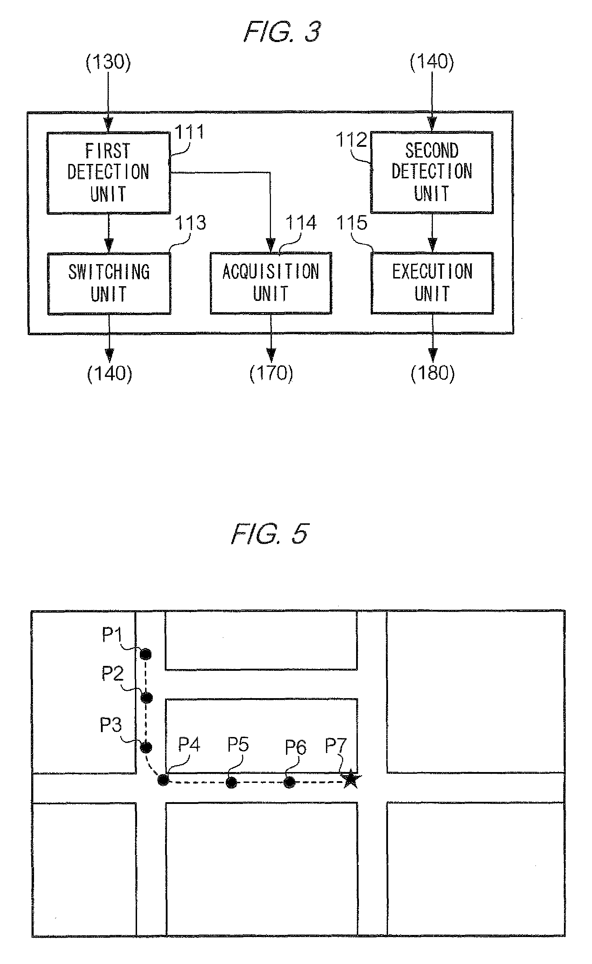

FIG. 3 is a functional block diagram showing functions implemented by control unit 110 of first unit 100. Control unit 110 executes a pre-stored program to implement functions corresponding to first detection unit 111, second detection unit 112, switching unit 113, acquisition unit 114, and execution unit 115.

First detection unit 111 has a function of detecting a state in which second unit 200 is detached from first unit 100. The state detected by first detection unit 111 will be referred to as a "first state" in the following description. In the present embodiment, the first state is a state in which a physical connection between first unit 100 and second unit 200 is cut off. Thus, first detection unit 111 detects the first state based on whether an electrical connection is made at connection unit 130.

Second detection unit 112 has a function of detecting a predetermined state after the first state. The state detected by second detection unit 112 will be referred to as a "second state" in the following description. In the present embodiment, the second state is a state in which wireless communication between second unit 200 and first communication unit 140 cannot be conducted. That is, the second state in the present embodiment is a state in which first unit 100 and second unit 200 are separated by a distance of approximately 10 m or more. Second detection unit 112 detects the second state based on whether wireless communication by first communication unit 140 is possible. It is to be noted that in the second state, first unit 100 and second unit 200 are physically separated from each other by a larger distance than in the first state.

Switching unit 113 has a function of switching a means for connecting to second unit 200. Switching unit 113 causes connection unit 130 to be used for connection with second unit 200 when connection by connection unit 130 is possible, and causes first communication unit 140 to be used for connection with second unit 200 when connection by connection unit 130 is impossible. When first detection unit 111 detects the first state, i.e., a state in which a physical connection with second unit 200 is cut off, switching unit 113 conducts an operation for causing first communication unit 140 to be used to achieve connection with second unit 200.

Acquisition unit 114 has a function of instructing positioning unit 170 to perform positioning, thereby to acquire position information. Upon acquisition of position information, acquisition unit 114 causes the position information to be stored in storage unit 120. When first detection unit 111 detects the first state, acquisition unit 114 acquires position information of first unit 100. Acquisition unit 114 in the present embodiment does not acquire position information until first detection unit 111 detects the first state, but is configured to be capable of acquiring the position information repeatedly after the detection of the first state by first detection unit 111.

Execution unit 115 has a function of executing a process for, upon detection of the second state by second detection unit 112, notifying a user that there is a possibility that second unit 200 has been lost. The process executed by execution unit 115 includes a process of notifying the detection of the second state and a process of notifying the position information in response to a request by a user. The process of notification of position information is executed after the process of notification of detection of the second state. In other words, the process of notification of detection of the second state is a preliminary process for notification of position information.

The foregoing is a description of the configuration of information-processing device 10. With the configuration, first unit 100 and second unit 200 cooperate with each other, so that predetermined functions are implemented by information-processing device 10. These predetermined functions include, for example, a telephone call using second communication unit 160, transmission/reception of an email and browsing of a Web page using second communication unit 160 and operation unit 260, playing of a game using touch panel unit 180, and so on. It is to be noted that in information-processing device 10, first unit 100 is provided with a configuration necessary for making of a telephone call, transmission/reception of an email, and so on, and therefore, a user can utilize these functions without using second unit 200.

A user of information-processing device 10 brings information-processing device 10 into a desired mode from among the first mode, the second mode, and the third mode, and performs an operation, as necessary, When information-processing device 10 is in the third mode, second unit 200 is detached from first unit 100. In such a state, a user holding first unit 100 may drop or leave behind inadvertently second unit 200, so that second unit 200 may be lost. To prevent such losing of second unit 200, information-processing device 10 operates in the manner described below.

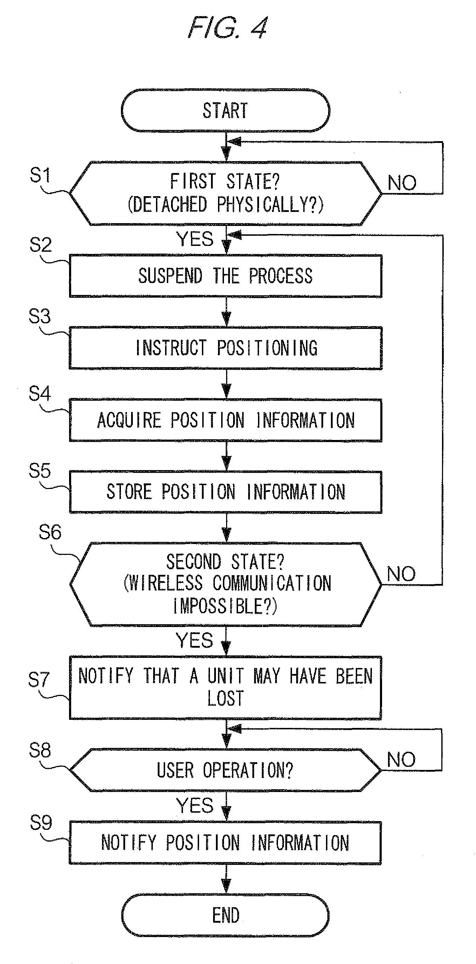

FIG. 4 is a flowchart showing a process executed by control unit 110 of information-processing device 10. It is to be noted that the process shown in FIG. 4 can be executed in addition to and concurrently with any of the aforementioned functions, such as a telephone call, as desired by a user. Control unit 110 starts executing the process shown in FIG. 4 upon detection of the first state (step S1). Namely, control unit 110 determines whether a connection is made by connection unit 130, and repeats this determination while the connection is maintained.

When the first state is detected, control unit 110 waits for a predetermined time period (hereinafter, "waiting time period") to lapse before executing the subsequent process (step S2). The waiting time period is in a range from 30 seconds to 5 minutes, for example. It is to be noted that a user may set the waiting time period to a desired time period. The reason the waiting time period is provided is as follows. Information-processing device 10 is in the first place supposed to be used in a state where first unit 100 and second unit 200 are detached physically from each other, and thus, if the subsequent process is executed only upon detection of physical detachment, there is a high risk that the process will be executed in vain. Also, the process shown in FIG. 4 is executed concurrently with a function desired by a user, and thus, from a user's viewpoint, is a secondary process. Excessive use of a hardware resource for such a secondary process would adversely affect implementation of the function desired by the user.

After the waiting time period has lapsed, control unit 110 instructs positioning unit 170 to perform positioning (step S3). Upon receiving the instruction, positioning unit 170 performs positioning, and forwards position information to control unit 110. Control unit 110 acquires the position information from positioning unit 170, and causes the acquired position information to be stored in storage unit 120 (or in a memory of control unit 110) (step S5).

After storage of the position information, control unit 110 determines a state of wireless communication performed by first communication unit 140 (step S6). In other words, control unit 110 determines whether wireless communication by first communication unit 140 is possible. A state in which wireless communication by first communication unit 140 is possible is a state in which an intensity of an electromagnetic wave received from first communication unit 240 is equal to or greater than a prescribed level. Namely, when the intensity of the electromagnetic wave is below the prescribed level, control unit 110 determines that the second state, i.e., a state in which wireless communication by first communication unit 140 has become impossible, is entered.

In a case where a wireless communication by first communication unit 140 is possible, control unit 110 repeats the process in steps S2-S5 described above. Thus, control unit 110 performs the acquisition and the storage of position information multiple times. The acquisition and the storage of position information are preferably performed periodically, but may be performed only once. When the process of step S2 is performed multiple times, a waiting time period that is different from the waiting time period set for step S2 performed for the first time (i.e., the waiting time period set for step S2 performed immediately after step S1) may be set for step S2 performed for the second time and thereafter. In the following description, when the waiting time period for step S2 performed for the first time and the waiting time period for step S2 performed for the second time and thereafter are to be distinguished from one another, the former will be referred to as "first waiting time period" and the latter will be referred to as "second waiting time period."

When wireless communication by first communication unit 140 has become impossible, control unit 110 executes a process of notifying the detection of the second state (step S7). At this time, control unit 110 performs a process to notify a user that there is a possibility that second unit 200 has been lost, thereby to draw the user's attention. The notification in step S7 is performed by means of display shown on touch panel unit 180. For example, touch pane unit 180 displays a message such as "Haven't you left the subordinate unit behind?" to attract the user's attention. Further, touch panel unit 180 may flicker an icon or a symbol that has been set beforehand for use in such attracting of the user's attention. Also, instead of display of information (i.e., visual notification), information-processing device 10 may perform notification by emitting a sound such as an alarm sound (audible notification), or by generating a vibration using a vibrator (tactile notification). These modes of notification may be used in any combination.

After attracting a user's attention, control unit 110 waits for an operation to be performed by a user (step S8). In this state, if the user performs a predetermined operation using touch panel unit 180, control unit 110 executes a process of notifying position information (step S9). That is, the predetermined operation performed by the user here represents a request for notification of position information. The user performs the predetermined operation when s/he notes that second unit 200 may have been lost after being notified by first unit 100. Upon performing of the operation by the user, control unit 110 causes touch panel 180 to display the position(s) indicated by the position information stored in step S5.

FIG. 5 is a diagram showing an example of displayed position information, in which it is assumed that second unit 200 has been dropped or left behind inadvertently on a street. In this example, control unit 110 causes the positions indicated by the position information to be displayed so as to be superimposed on a map covering the positions. It is to be noted that the data for the map is pre-stored in storage unit 120 or is received via second communication unit 160. In FIG. 5, positions P1, P2, ... P7 represent the positions indicated by the position information stored in step S5. Position P1 corresponds to an item of position information acquired first in the process shown in FIG. 4, and position P2 corresponds to an item of position information acquired second. Position P7 corresponds to a current position of the user (or first unit 100). Thus, a line connecting positions P1, P2, ... P7 represents a path of movement of the user. By referring to this image, the user can follow a path including the places where second unit 200 may have been left behind. When performing such display, control unit 110 may cause time information corresponding to each item of position information to be displayed additionally.

As is described in the foregoing, in informataon-processing device 10 of the present embodiment, a time period in which the position information is acquired is limited, whereby it is possible to efficiently lower the risk that second unit 200 may be lost. Firstly, information-processing device 10 does not perform acquisition of position information when first unit 100 and second unit 200 are connected physically to each other because there is no risk that a user may lose only second unit 200. Secondly, in information-processing device 10, the aforementioned first waiting time period is provided, so that acquisition of position information is not performed when the physical detachment is considered as resulting from an ordinary use of information-processing device 10. Information-processing device 10 having these two features can avoid unnecessarily acquiring position information for preventing second unit 200 from being lost.

In the present embodiment, in a state in which first unit 100 and second unit 200 are connected physically to each other, there is no possibility that second unit 200 alone has been lost (though there is a possibility that information-processing device 10 as a whole has been lost). On the other hand, in the first state, there is a higher possibility that second unit 200 has been lost as compared with the state before the first state. In other words, in the first state, there is a possibility that second unit 200 will be lost though it may not have been lost. In the second state, the distance between first unit 100 and second unit 200 is greater than a distance assumed necessary for ordinary use, and there is a higher possibility that second unit has been lost than in the first state. Thus, in information-processing device 10, the possibility that second unit 200 has been lost is determined based on a physical distance between first unit 100 and second unit 200 (inclusive of whether they are connected physically). The physical distance here may represent a degree of detachment.

It is to be noted that in some cases, the physical distance between first unit 100 and second unit 200 can be determined based on the stored position information. For example, provided that second unit 200 has been left behind and remains where it was left, the distance between position P1 and position P7 shown in FIG. 5 is considered to be approximately the same as the distance between first unit 100 and second unit 200. Therefore, instead of the aforementioned determination in step S6, control unit 110 may calculate the distance between the position indicated by the position information acquired first in step S4 and the position indicated by the latest position information acquired in step S4, and determine that the second state is entered when the calculated distance exceeds a predetermined threshold value. In such a case, second detection unit 112 functions as a means for comparing the distance derived from the stored position information with a threshold value, rather than functioning as a means for determining whether a wireless communication by first communication unit 140 is possible.

### [Modifications]

The foregoing exemplary embodiment is one embodiment of the present invention, and may be modified as will be described below. The following modifications may be used in any combination, as necessary.

### (Modification 1)

In the present invention, the first state and the second state are distinguished from each other based on a degree of detachment. The degree of detachment here is not limited to the physical distance between first unit 100 and second unit 200, and may be defined as a time period during which these units are detached from each other, an intensity of electromagnetic wave for wireless communication between these units, or a difference in movement between these units, for example. In the present invention, it is possible to use the time period, the intensity of electromagnetic wave, or the difference in movement to define a condition relating to the detachment between the units, whereby the first state and the second state can be distinguished based on whether the condition is fulfilled.

It is generally considered that the longer the time period is that the units are detached from each other, the higher the possibility that second unit 200 has been lost is. For example, when the units are detached from each other for longer than a time period assumed necessary for ordinary use, there is a possibility that second unit 200 has been left behind. Accordingly, in the present invention, it is possible to determine that the first state is entered when a state in which second unit 200 is detached continues for a predetermined time period (hereinafter, a "first time period"), and the second state is entered when the state in which second unit 200 is detached continues for a predetermined time period that is longer than the first time period (hereinafter, a "second time period").

It is to be noted here that each of the first time period and the second time period may be predetermined or may be determined based on an actual mode of use of the device by a user. For example, it is possible that each time second unit 200 is detached from first unit 100, first unit 100 measures a time period during which second unit 200 is detached, and based on an average or the maximum value of thus measured detachment time periods, calculates the first time period and/or the second time period. It is also possible that first unit 100 is adapted to receive an operation performed by a user for setting the first time period and the second time period, so that the first time period and the second time period are set according to information input by the operation.

Also, in general, as a distance between the units becomes greater, an intensity of electromagnetic wave received by one unit from the other for wireless communication becomes weaker. Therefore, instead of determining whether the second state is entered based on whether wireless communication can be performed between first communication units 140 and 240, it is possible to determine whether the second state is entered based on whether an intensity of electromagnetic wave received by these units is greater than a predetermined level.

Further, if the units are both held by a user, the movements of the units will be substantially the same. Therefore, if a state in which one unit is moving while the other unit stays motionless continues, there is a possibility that the other unit has been left behind. Thus, in the present invention, it is possible to use motion information output from motion sensor units 150 and 250, whereby it is determined that the device is in the second state when a degree of difference between movements indicated by the motion information from the respective motion sensor units continues to be greater than a predetermined level for longer than a predetermined time period. Particularly, it may be determined that the second state is entered when a state in which one unit is considered to be moving while the other unit is considered to remain motionless has continued for longer than a predetermined period of time.

### (Modification 2)

Since first unit 100 and second unit 200 are designed to be detachable from each other, it cannot necessarily be concluded that either one of the units has been lost because they are in a detached state. For example, in a case where a user is at home or in an office, and first unit 100 and second unit 200 are detached from each other, there is a possibility that such detachment is made intentionally by the user.

Therefore, in the present invention, when the acquired position information indicates a predetermined position, the notification of detection of the second state may not be performed. For example, a user may register position information of the user's home in advance, so that in a case where the position information acquired first in the aforementioned step S4 corresponds to the registered position information, first unit 100 may omit executing the subsequent steps or may set the aforementioned second waiting time period to be longer than in another case. In this way, unnecessary acquisition and storage of position information can be caused to occur less often.

### (Modification 3)

In the foregoing exemplary embodiment, upon physical disconnection of second unit 200, wireless communication by first communication unit 140 is started. Accordingly, a state in which wireless communication by first communication unit 140 is possible is equivalent to a state in which the physical connection of second unit 200 is cut off, and thus indicates the first state. Therefore, a first detection unit of the present invention may determine that the state in which the wireless communication is possible is the first state.

### (Modification 4)

The physical connection in the present invention may not be an electric connection, and may be determined based on an output from a sensor that detects presence/absence of a physical contact, for example. In such a case, communication where first unit 100 and second unit 200 are connected physically to each other is also carried out by means of wireless communication performed by first communication units 140 and 240.

### (Modification 5)

The aforementioned first waiting time period may be "0." Namely, control unit 110 may instruct positioning unit 170 to perform positioning immediately when the first state is detected in step S1.

### (Modification 6)

In the present invention, a mode of notification of the second state is not limited to a notification to a user by the information-processing device itself, and may be performed as a notification to a user performed via an external device such as a server device, another information-processing device, or the like. For example, an information-processing device of the present invention may transmit the position information and/or information indicating the time at which the position information is acquired to a server device, or transmit such information to another information-processing device (e.g., a personal computer at a user's home) by email. For example, in a case where an information-processing device of the present invention is adapted to transmit data including position information to a predetermined email address whereby a map such as that shown in FIG. 5 with regard to the aforementioned exemplary embodiment is displayed on a personal computer at a user's home, even if the user has lost the base unit or both the base unit and the subordinate unit, it is possible to provide the user with information to assist in finding the lost unit(s).

### (Modification 7)

In the present invention, the notification of position information may be performed without requiring a user operation. Namely, the notification of position information may be performed without steps S7 and S8 in the aforementioned exemplary embodiment being conducted when it is determined that the second state is entered.

### (Modification 8)

A detachable unit of the present invention may include, in addition to the above-described configuration of second unit 200 (or subordinate unit), a part of the configuration of first unit 100 (or base unit). For example, a detachable unit (e.g., subordinate unit) of the present invention may have a configuration in which positioning unit 170 is added to the configuration of second unit 200. In such a configuration, to carry out the present invention, position information is acquired by the subordinate unit, and a base unit does not have to acquire position information. The subordinate unit may transmit the position information via a communication means corresponding to first communication unit 240, and the base unit may receive (or acquire) the position information via a communication means corresponding to first communication unit 140.

Further, notification of information may be performed not only in a base unit but also in a subordinate unit. For example, by providing a subordinate unit with a display, it is possible to cause the subordinate unit to display position information. Also, the subordinate unit may be equipped with a loudspeaker for outputting a sound or a vibrator for generating a vibration.

### (Modification 9)

The present invention may be carried out in a configuration in which there is a plurality of subordinate units that can be connected to a single base unit. In such a configuration, the base unit may distinguish between the subordinate units based on their identification information, and manage information relating to connection/disconnection for each subordinate unit, so that, when notifying a user of information relating to a subordinate unit, the identification information of the subordinate unit is notified as well. In this way, the user can be given information indicating which subordinate unit was lost and where it was lost.

### (Modification 10)

The present invention is not limited to a mobile phone, and can be applied to another information-processing device. For example, the present invention can be applied to a communication terminal device such as a PDA (Personal Digital Assistant) or the like, a laptop computer, a camera, a portable music player, a portable game player, and so on, so long as a detachable unit can be attached to and detached from the device. In such information-processing devices, a means for communicating with a mobile communications network is dispensable.

Also, the present invention may be embodied as a program for causing a computer (a CPU or the like) of an information-processing device to implement the present invention or as a storage medium, such as an optical disk, on which the program is stored. A program according to the present invention may be downloaded to a computer via a network such as the Internet, and installed in the computer for use.

## Claims

1. An information-processing device comprising:
a connection unit that connects to a detachable unit;
a first detection unit that, based on a state of connection by the connection unit, detects a first state in which the detachable unit is detached from the information-processing device;
an acquisition unit that, when the first detection unit detects the first state, acquires position information representing a position of the information-processing device or the detachable unit;
a second detection unit that, based on a state of connection by the connection unit, detects a second state in which a predetermined condition relating to detachment of the detachable unit is fulfilled after the detection of the first state by the first detection unit; and
an execution unit that, upon detection of the second state by the second detection unit, executes a process of notifying the position information acquired by the acquisition unit.

2. The information-processing device according to claim 1, wherein the detection unit comprises:
a first connection unit that connects to the detachable unit physically; and
a second connection unit that connects to the detachable unit by wireless communication,
the first detection unit detecting the first state based on a state of connection by the first connection unit, the second detection unit detecting the second state based on a state of connection by the second connection unit.

3. The information-processing device according to claim 1,
wherein:
the connection unit connects to the detachable unit by performing wireless communication with the detachable unit within a predetermined range;
the first detection unit detects the first state when the wireless communication with the detachable unit by the connection unit is possible; and
the second detection unit detects the second state when the wireless communication with the detachable unit by the connection unit has become impossible.

4. The information-processing device according to claim 1,
wherein:
the position information acquired by the acquisition unit includes first position information and second position information that is acquired after acquisition of the first position information; and
the second detection unit detects the second state based on whether a distance between a position indicated by the first position information and a position indicated by the second position information exceeds a predetermined threshold value, instead of based on the state of connection by the connection unit.

5. The information-processing device according to any one of claims 1-4, wherein the acquisition unit acquires the position information after a predetermined time period has lapsed from the detection of the first state by the first detection unit.

6. The information-processing device according to any one of claims 1-5, wherein the execution unit executes a process of displaying a position indicated by the position information superimposed on a map without requiring an operation performed by a user.

7. The information-processing device according to any one of claims 1-5, wherein the execution unit performs the process by transmitting data including the position information to an external device.

8. An information-processing method comprising:
detecting a first state in which a unit that can be detachably connected to an information-processing device by means of a connection unit is detached from the information-processing device, based on a state of connection by the connection unit;
when the first state is detected, acquiring position information representing a position of the information-processing device or the detachable unit;
detecting, based on a state of connection by the connection unit, a second state in which a predetermined condition relating to detachment of the detachable unit is fulfilled after the detection of the first state; and
upon detection of the second state, executing a process of notifying the acquired position information.

9. A program, which when executed by a computer of an information-processing device, causes the computer to execute a method comprising:
detecting a first state in which a unit that can be detachably connected to the information-processing device by means of a connection unit is detached from the information-processing device, based on a state of connection by the connection unit;
when the first state is detected, acquiring position information representing a position of the information-processing device or the detachable unit;
detecting, based on a state of connection by the connection unit, a second state in which a predetermined condition relating to detachment of the detachable unit is fulfilled after the detection of the first state; and
upon detection of the second state, executing a process of notifying the acquired position information.
